# EUROPEAN PATENT SPECIFICATION

(11) **EP 4 170 630 B1**
(45) Date of publication and mention of the grant of the patent: **25.02.2026**
(21) Application number: 22202871.4
(22) Date of filing: 20.10.2022
(51) Int. Cl.: G09B 19/00

(54) **SENSOR SYSTEM AND METHOD FOR ASSISTED FOOD PREPARATION**
SENSORSYSTEM UND VERFAHREN ZUR UNTERSTÜTZTEN LEBENSMITTELZUBEREITUNG
SYSTÈME DE CAPTEUR ET PROCÉDÉ DE PRÉPARATION D'ALIMENTS ASSISTÉE

(30) Priority: 21.10.2021 US 202163262819 P; 06.10.2022 US 202217960951
(43) Date of publication of application: 26.04.2023
(73) Proprietor: Whirlpool Corporation, Benton Harbor, MI 49022 (US)
(72) Inventor: Rohatgi, Pratyaksh, 21024 Cassinetta di Biandronno (VA) (IT); Vehslage, David R., 21024 Cassinetta di Biandronno (VA) (IT)
(74) Representative: PGA S.p.A., Milano, Succursale di Lugano

(56) References cited:
- US-A1- 2016 059 412
- US-A1- 2018 081 449

## Description

### BACKGROUND OF THE INVENTION

The present disclosure generally relates to a sensor system for a food preparation environment and, more specifically, to a system that provides interactive feedback to assist in recipe preparation. US2018081449A1 discloses an example of interactive cooking aid system using a movement detection apparatus to monitor and guide a user's cooking action.

### SUMMARY OF THE DISCLOSURE

A motion analysis apparatus for food preparation is disclosed in claims 1-10.

A method for providing a food preparation instruction is disclosed in claims 11-13.

### BRIEF DESCRIPTION OF THE DRAWINGS

In the drawings:
FIG. 1 is a projected view of a food preparation environment demonstrating a monitoring system comprising a monitoring device for a food preparation routine;
FIG. 2 is a schematic diagram of a monitoring system comprising a monitoring device for a food preparation routine;
FIG. 3A is a projected view of a monitoring device in connection with a wearable device;
FIG. 3B is a projected view of a monitoring device in connection with a handheld implement or appliance;
FIG. 4 is a projected view of a food preparation environment demonstrating a monitoring device implemented in an exemplary food preparation routine;
FIG. 5 is a projected view of a food preparation environment demonstrating a monitoring device implemented in an exemplary food preparation routine with a handheld implement or appliance;
FIG. 6 is a projected view of a food preparation environment demonstrating a monitoring device implemented in an exemplary food preparation routine;
FIG. 7 is a flow chart demonstrating a method for controlling a food preparation routine with the monitoring system; and
FIG. 8 is a block diagram of a monitoring device for a food preparation routine in accordance with the disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to a monitoring device and feedback system. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

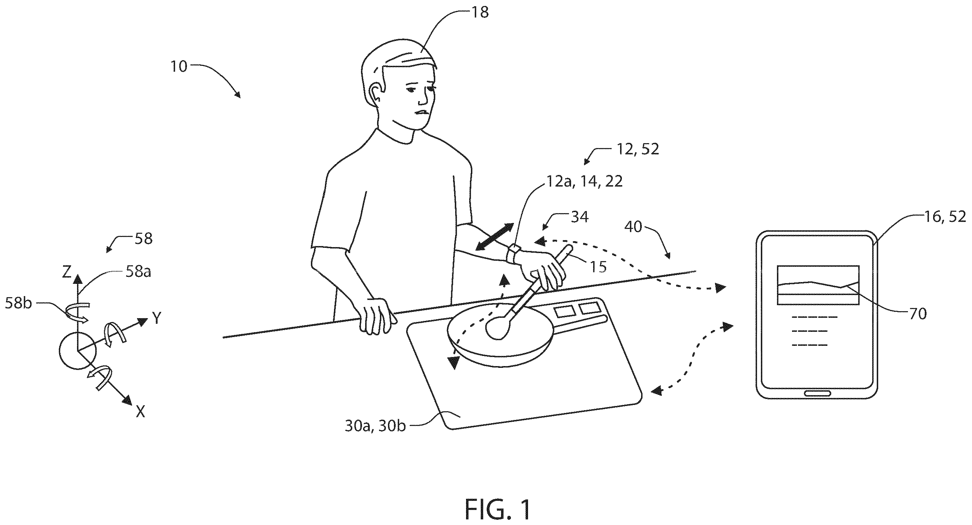

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a . . . " does not, without more constraints, preclude the existence of additional identical elements in the process, method, article, or apparatus that comprises the element.

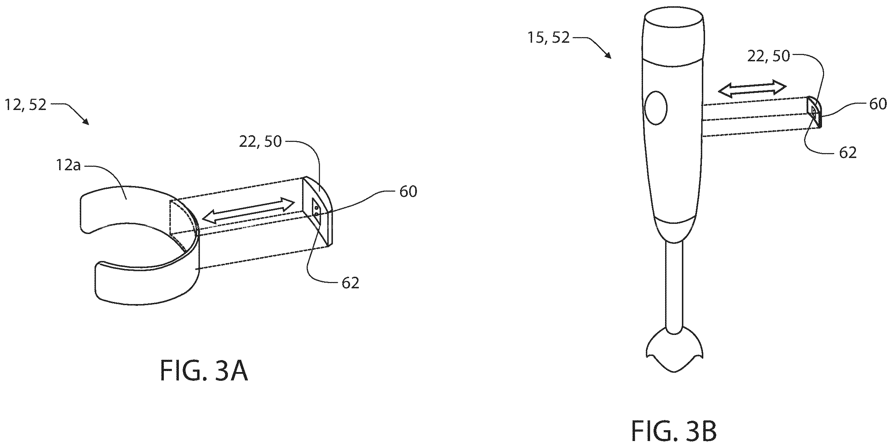

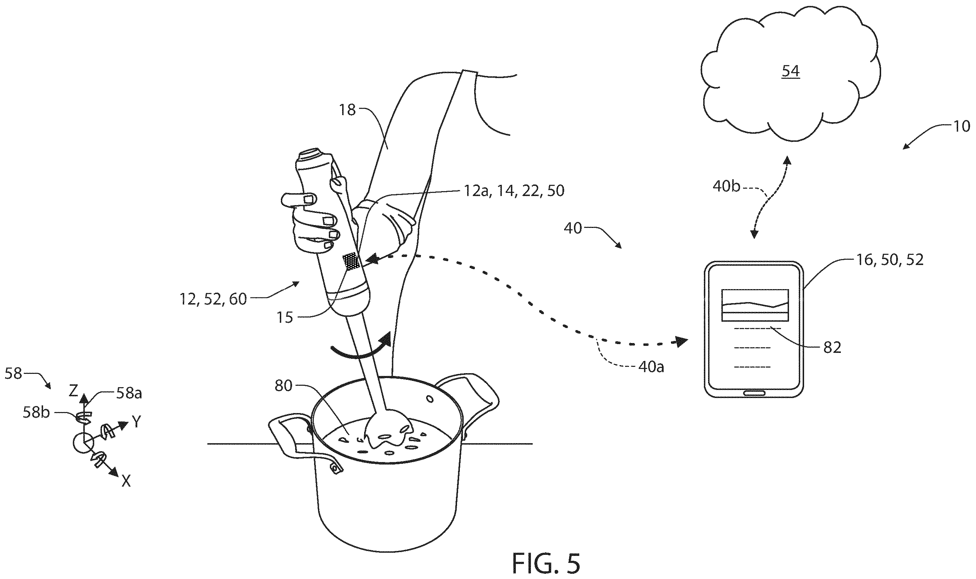

Referring generally to FIGS. 1-3, a monitoring system is generally designated as reference numeral 10. As shown in FIG. 1, in various embodiments, the monitoring system 10 comprises a motion recording and analysis apparatus that is generally referred to herein as a monitoring device 12. The monitoring device 12 is shown in FIGS. 1 and 3A as a wearable device 12a in connection with a wearable accessory 14 (e.g., a wristband). Additionally, the monitoring device 12 is shown in FIGS. 3B and 5 as an implement tracking device 12b in connection with a handheld implement 15 (e.g., a handheld appliance or cooking utensil). Though various exemplary implementations are discussed, the monitoring system 10 may generally implement the monitoring device 12 in a food preparation environment to provide an interactive cooking experience via one or more computerized display devices 16 (e.g. tablet, computer, smartphone) in communication with the monitoring device 12. As elaborated in various detailed examples, the system 10 provides feedback to a user 18 and may also control of one or more appliance(s) 30. In this way, the system 10 may provide for an assisted food preparation experience that not only improves the resulting food products but also instructs the user 18 how to improve cooking and food preparation techniques through interactive instructions.

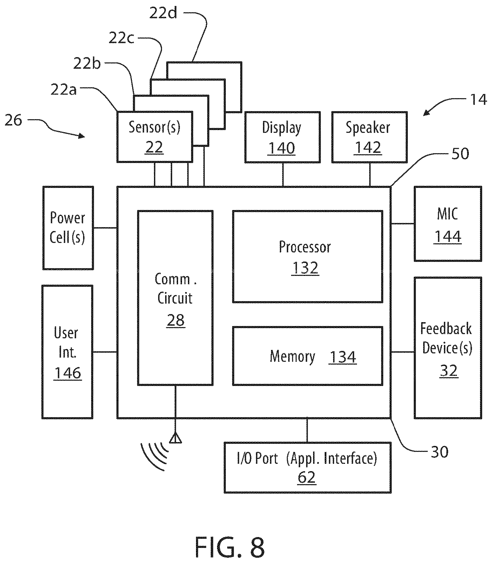

As depicted in FIG. 1, the monitoring device 12 is shown in connection with the wearable accessory 14 of the user 18. The monitoring capability of the device 12 may be provided by a plurality of sensors 22. The sensors 22 are generally demonstrated in the figures as reference numeral 22 and are demonstrated in further detail in FIG. 8. In many instances, the sensors 22 may include an inertial measurement unit (IMU) 22a. The IMU 22a may capture motion data indicative of movements of the user 18. The motion or kinematic sensor data may correspond to inertial and/or directional data. The IMU 22a may include an accelerometer, a gyroscope, and/or a magnetometer as well as other suitable devices for measuring the motion and orientation of the monitoring device 12. These devices may generally be referred to as motion sensors or motion detection devices for clarity. In general, the motion detection device(s) discussed herein are operable to capture inertial data or motion data comprising at least one of a linear velocity or acceleration data as well as angular rate data identifying the movements of the monitoring device 12 in connection with the user 18 and/or the handheld implement 15 or appliance 30. The linear velocity or acceleration data may be detected by an accelerometer, and the angular rate data may be captured by a gyroscope. Additionally, the motion data may include directional data that may be recorded by a magnetometer, which may identify the direction of a magnetic pole or field of the Earth.

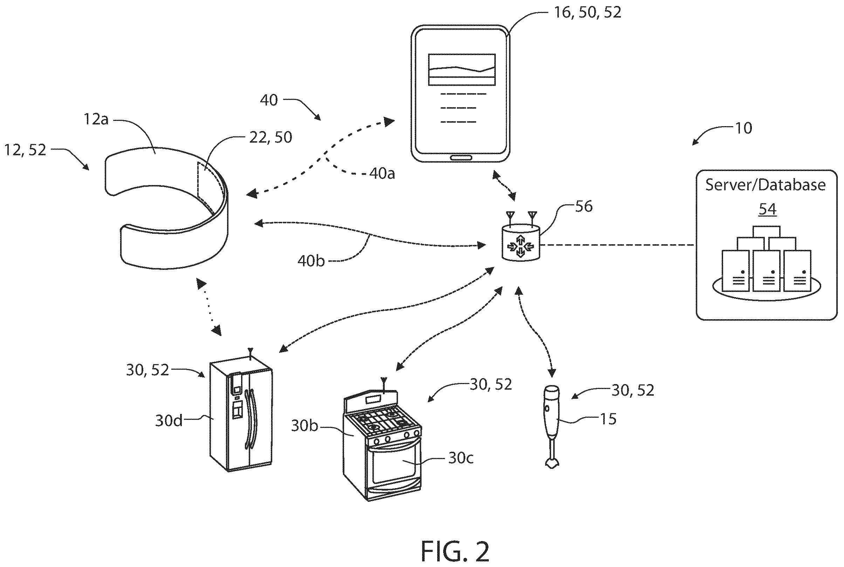

In the examples discussed herein, the monitoring device 12 may be coupled to the user 18 or the handheld implement 15, such that the movement of the monitoring device 12 is indicative of the movement of the user 18 and/or the handheld implement 15. In this configuration, a controller 50 (FIG. 2) of the monitoring system 10 may monitor the motion data corresponding to various food preparation steps of a recipe processed by the user 18. Based on the motion data, the controller 50 of the monitoring system 10 may compare the motion data captured by the monitoring device 12 with food preparation movements associated with the recipe. In some cases, the motion data or sensor data detected by the monitoring device 12 may also be identified by the controller 50 as a manual command or input providing a cue or trigger to select a recipe step. Accordingly, the controller 50 may monitor the sensor data for movements of the user 18 indicative of food preparation techniques as well as gestures to progress through the steps of a recipe.

In general, the monitoring system 10 may provide for visual, audible, and/or tactile cues that lead the user 18 through a recipe accessed via a food preparation application (e.g., a software application or app). Depending on the capability of the monitoring device 12, the display device 16, and an appliance 30, the food preparation application may be displayed on a corresponding display screen 140 (FIG. 8). For example, the food preparation application may provide audible and/or visual instructions (e.g., videos, animations, text descriptions) of each step of a recipe on the monitoring device 12, the display device 16, or the appliance 30 depending on the capability of each of the corresponding devices. In order to synchronize the operation of the food preparation application, each of the devices may be in communication via one or more communication interfaces 40 (FIGS. 1 and 2) as later discussed in reference to FIG. 2. In this way, the system 10 may provide interactive cues and instructions to the user 18 via the monitoring device 12, the display device 16, and/or the appliance 30 in response to the motion data detected via the monitoring device 12.

In operation, the system 10 may monitor the motion data or sensor data captured by the monitoring device 12 in reference to a food preparation movement. The food preparation movement may correspond to a motion profile that may change for each step of a recipe. Examples of motion profiles may include a kneading motion, a stirring motion, a whipping motion, a rolling motion, and various movements that may be associated with one or more steps of the recipe accessed via the food preparation application. Such movements may be defined based on experimental data providing ranges of motion data corresponding to the preferred or best techniques for each step of the recipe. Based on the sensor data reported by the monitoring device 12, the monitoring system may provide feedback in a number of ways. For example, in some instances, feedback and instructions may be communicated to the user 18 via one or more display devices 16 (e.g., tablet, computer, smartphone, smart home hub, etc.). In some case, the feedback or instructions may be communicated directly from the monitoring device 12.

For example, in response to the comparison of the motion data to the predefined motion profile, a controller 50 or processor of the monitoring device 12 may provide feedback to the user 18 indicating whether the detected motion matches the predefined movement or motion profile for the recipe instruction. An exemplary block diagram of the monitoring device is discussed later in reference to FIG. 8. The feedback can include audible or visual instructions displayed on the monitoring device 12 in cases where a display and speaker are implemented in the wearable device 12a (e.g., a smart watch). In other cases, the feedback may be communicated via audible or force feedback (e.g., vibrations) via a force feedback device 32 (e.g., vibration motor) of the monitoring device 12. Accordingly, the monitoring device 12 may provide for real-time feedback and coaching to improve the practice of various food preparation techniques through intuitive instructions.

In some cases a recipe may include a number of steps that require one or more movements of the user 18, the handheld implement 15, and/or settings of the appliance(s) 30 required to complete the preparation of a food product. In order to guide or orchestrate each of the steps of the recipe, the system 10 may monitor the sensor data captured by the monitoring device 12. Based on the sensor data, the system 10 may provide feedback to the user 18 regarding a movement or technique associated with each of the preparation steps. For example, in a stirring step of a recipe, the system 10 may detect that motion of a user is too abrupt or changes too rapidly. Based on this detection, system 10 may output an instruction to the user 18 to slow or elongate the movements associated with the monitoring device 12. Similarly, in a whipping step, the system 10 may detect that the movement of the user is less than a desired rate or intensity. In response to such a condition, the system 10 may instruct the user to increase a rate of motion. In this way, the system 10 may provide for feedback and coaching of the user 18 via interactive instructions communicated from the monitoring device 12, the display device 16, and/or the appliance 30.

In some implementations, the controller 50 of the system 10 on which the food preparation application is operating may automatically proceed through steps of the recipe in response to the sensor data detected via the monitoring device 12. For example, the controller 50 may begin a recipe by initiating or displaying a motion instruction for a first step of a recipe. Once initiated, the controller 50 may monitor the sensor or motion data identified by the monitoring device 12 and compare the sensor data to a food preparation movement associated with the first step of the recipe. More specifically, the controller 50 may access a first motion profile defining the food preparation movement based on the first step of the recipe. The step and associated information may be stored in a local memory or the remote database 54. Based on the sensor data, the controller 50 may monitor an accumulation (e.g., summation, integration of numeric model, etc.) of the food preparation movement (e.g., motion data that matches the first motion profile) and determine a completion of the first step of the recipe in response to the accumulation of the food preparation movement meeting or exceeding predefined accumulated motion total associated with the first step. Accordingly, the system 10 monitors the sensor data for motion (e.g., acceleration, velocity, range, variation, etc.) and compares the motion of the user 18 to motion profiles for various recipe steps.

As discussed herein, each of the motion profiles may be defined based on experimental results captured with the monitoring device 12 or similar motion detection devices (e.g., accelerometers, gyroscopes, magnetometers, etc.). In operation, the motion data is captured in terms of linear and/or rotational acceleration. In order to define the motion profiles for each of the food preparation movements (e.g., kneading, stirring, whipping, rolling, etc.), the motion data may be measured and recorded in terms of linear acceleration (e.g. meters per second squared (m/s²) or in G-forces (g)) and rotational acceleration (e.g., degrees per second). For example, in order to define a whipping motion for a particular recipe step, the motion data of the monitoring device 12 may be measured or simulated with a kinematic model of the user 18 having an ideal or model movement, which may be measured from one or more professional chefs or skilled food preparation professionals. Based on the experimental motion data, ranges of acceleration for each of the translational axes 58a and rotational axes 58b defined relative to the coordinate system 58 may be identified for each of the food preparation movements.

In operation, each of the food preparation movements may be defined both quantitatively and qualitatively, and the system 10 may monitor the motion data separately to identify the conformance of the movement generated by the user 18 based on the information reported by the monitoring device 12. That is, the rate of movement of the whisk in connection with the user 18 or directly connected to the monitoring device 12 may be compared to corresponding target rates to identify whether the movement of the user 18 undertaking the food preparation task is at a target intensity or within a target acceleration range. That is, the controller 50 may process the motion data to identify the average peak acceleration and frequency of periodic movements (e.g., back and forth repetitive movements) of the monitoring device 12 in connection with the user 18 and/or the handheld implement 15. Based on the motion data from the monitoring device 12, the controller 50 may determine and discriminate between occurrence of a whipping motion, stirring motion, or various movements of the whisk as defined for different food preparation movements according to a recipe step. The stirring motion may be defined by the recipe step as linear stirring primarily extending along one axis, a rotational stirring creating acceleration in multiple axes, or a beating motion that may correspond to similar motion in multiple axes that is more abrupt (e.g., including greater changes in acceleration direction) than rotational stirring. For each case, the controller may determine whether the food preparation motion conforms to the motion profile defined in the recipe step by comparing the motion data captured by the monitoring device 12 to the motion profile defined in the recipe step.

The determination of whether the motion data detected by the monitoring device 12 conforms to the motion profile defined in the recipe step may be accomplished based on a variety of comparisons. For example, the quantitative assessment of the motion data may be identified based on a comparison of the linear acceleration to a target acceleration rate to determine whether the movement of the user 18 conforms to the motion profile for the recipe step. More specifically, the linear acceleration may be identified along a motion path in reference to the translational axes 58a of the coordinate system 58. The motion path may be compared to the target motion profile based on the peak acceleration in each of the translational axes 58a, which may be monitored as an average of the peak acceleration of the repetitive movement detection over a predetermined time (e.g., 2, 5, 8, etc. seconds). The average peak acceleration may be compared to a predetermined value of the average peak acceleration defined in the motion profile for the recipe step. Based on the comparison between the motion data detected for the user 18 by the monitoring device 12 and the predetermined values stored for the motion profile, the controller 50 may determine the extent to which the average peak acceleration or the acceleration range of the motion data matches the target motion profile.

The level of conformance of the motion of the user 18 to the predetermined motion profile may be identified in response to the average peak acceleration matching the target acceleration defined by the motion profile. In cases wherein the average peak acceleration is less or greater than the target, the controller 50 may control the system 10 to output an instruction to increase or decrease the intensity of the motion. Additionally, the controller 50 may calculate the percent difference between the target acceleration and the motion reported by the monitoring device 12. The percent difference may be communicated to the user 18 via the display devices 16 in the form of an instruction (e.g., "slow down, your motion exceeds the target intensity or acceleration by X%"). Similarly, the duration of the recipe step may be modified by the controller 50 in response to the difference in the intensity of the motion of the user 18 over time compared to the target rate or intensity identified in the motion profile. For example, if the user 18 achieves an average rate of acceleration that is 20% less than the target average acceleration, the controller 50 may extend the time for the recipe step by a corresponding time (e.g., increase from 5 minutes to 6 minutes for a recipe step.) In this way, the controller 50 of the system 10 may monitor the motion data reported by the monitoring device to identify whether the motion qualitatively conforms to the motion profile associate with the recipe step.

In addition to the quantitative assessment, the controller 50 may monitor the motion data from the monitoring device 12 to qualitatively assess the motion data relative to the motion profile. Continuing with the same example, the whipping motion may be defined as a linear stirring motion, a rotational stirring motion, or a beating motion. In order to qualitatively assess the quality of the movement of the user 18 during the recipe step, the controller 50 may compare the motion data to the motion profile based on the variations of the linear or rotation motion. For example, a linear stirring motion may be defined by the motion profile of the recipe as extending along a line or arc, which may correspond to acceleration data that occurs repetitively along a line or vector measured among the translational axes 58a. According, the controller 50 may monitor the motion data detected by the monitoring device 12 to determine the vector along which the acceleration occurs and the conformance to the vector over time. More specifically, the controller 50 may detect a recurring, alternating direction of the linear acceleration of the user 18 to identify conformance with a linear path for the linear stirring motion. The conformance of the acceleration to the linear path may similarly be communicated by the system 10 to the user 18 via the display devices 16. Similarly, movement that does not conform to the linear path may vary among multiple axes or may include components of rotational acceleration that are not indicative of a linear stirring motion.

The detection of such non-conforming movements may be identified by the controller 50 and communicated to the user 18 to correct the movement associated with the current recipe step. For example, in response to the motion data failing to conform to a linear path, the controller 50 may output instructions to the user 18 via the display devices 16 instructing the user to, "Adjust motion to a linear path. The current motion includes more circular or rotational motion than desired." In addition to the text or audible instructions, detailed figures may be displayed demonstrating the linear path in relation to a hand of a representative user completing the movement. In some examples, an example video clip or animated graphic (e.g. GIF) of the target movement associated with the predetermined motion profile for the recipe step may be displayed on one or more of the display devices 16. In this way, the controller 50 of the system may monitor the motion data to determine whether movement of the user 18 qualitatively conforms to the model technique instructed for each recipe step. As discussed throughout the disclosure, the motion profiles or predefined movements associated with each of the recipe steps may be defined based on experimental data providing ranges of motion data (average acceleration, range of acceleration, linear versus rotational motion, jerk/abruptness or rate of change of direction of the acceleration, frequency, stroke length, etc.) corresponding to the preferred or best techniques for each step of the recipe. Based on the sensor data reported by the monitoring device 12, the monitoring system may provide feedback to the user in a number of ways to assist the user 18 in conforming to the recipes steps.

The monitoring of the sensor data captured by the monitoring device 12 may be applied in a variety of ways as discussed in the following exemplary use cases. For example, the sensor data may be applied by the system 10 to provide feedback to the user 18, track the progress of completion of each recipe step, and determine or estimate a quality of the finished food product produced with the recipe based on the performance of the user 18 relative to the predefined movements and steps of the recipe. In this way, the system 10 may provide tracking and feedback for each step of the recipe as well as make qualitative assessments of the movement identified in the sensor data. Based on the motion or sensor data, the system 10 may be operable to distinguish effective movements that corresponds to an ideal or model food preparation technique (e.g., stirring, whipping, kneading, etc.) from movements that are not associated with the preparation techniques and motion profile associated with the pending step of the recipe. Based on this comparative assessment, the system 10 may monitor the rate of completion or time necessary to complete each step of the recipe and provide instructions as to how the technique of the user 18 can be improved to conform to the motion profile.

The quality assessment may further be applied by the controller 50 to adjust instructions or automated steps associated with one or more of the appliances 30. For example, based on the performance of the user 18 relative to the target or predefined motion profiles, the system 10 may estimate a resulting quality of the resulting food product (e.g., product less airy or fluffy as a result of poor whipping form). The quality assessment may further be evaluated to adjust recipe instructions or settings of one or more of the appliances 30. In some cases, the quality assessment may be implemented to adjust the temperature of a refrigerator 30d for storage or a baking temperature of the oven 30c in order to optimize the resulting quality of the food product. Accordingly, the disclosure provides for a wide range of corrective instructions and tracking operations that are applied by the system 10 to improve the interactive operation with the food preparation application.

As previously discussed, the movement detected via the monitoring device 12 during the first step of the recipe may be tracked by the controller 50 to detect whether the accumulated motion that conforms to the motion profile for the food preparation motion of the first step is sufficient to indicate that the first step is complete. For example, if the first step is a whipping step, the controller 50 may track the detected movement associated with an effective whipping technique based on the predefined motion profile to determine a rate at which the whipping is completed. Based on the determination, a duration of the whipping step may be increased or decreased. Once the accumulated motion associated with effective whipping is determined by the controller 50 to be complete, the controller 50 may identify the completion of the first step of the recipe and move forward to a second step of the recipe. Upon completion of the first step, the controller 50 may output an instruction identifying the second step to the user 18 to indicate the next step required to complete the cooking operation as defined by the recipe.

In addition to providing instructions for manual user operations, the system 10 may similarly be applied to control one or more appliance(s) 30 to complete various preheating, temperature adjustment, or more generally, setting adjustments required to complete one or more of the steps of the recipe. For example, one or more of the steps controlled by the system 10 may communicate a control instruction to one of more appliance(s) 30. For example, the communication interface(s) 40 of the system 10 may provide for communication between the controller 50 and the one or more appliance(s) 30. In some cases, the controller 50 may adjust or control an oven 30c or burner setting of a range 30b. For example, based on a recipe step, the controller 50 may automatically set the temperatures and cooking cycles needed for cooking the recipe with a cooktop 30a, freestanding range 30b, oven 30c or similar heating devices or appliances. Similarly, the controller 50 may communicate a temperature setting to a refrigerator 30d, which may adjust the temperature of the refrigerator 30d to support a pending cooling action required for the recipe. In addition to or as a trigger to select the step associated with the automatic control of the appliance(s) 30, the controller 50 may monitor the sensor data for movements of the user 18 indicative of one or more gestures (e.g. a page turn motion, pointing motion, a swipe, a twist of the hand or wrist, etc.) to activate the automated control of the appliance(s) 30. Accordingly, the motion data may be monitored by the controller 50 of the system 10 to determine the completion of a step in the recipe and/or the system may monitor the sensor data for various cues or gestures to trigger the activation of one or more recipe steps.

As shown in FIG. 1, the user 18 is shown undertaking a stirring operation and the monitoring device 12 is connected to or incorporated in the wearable accessory 14. In this configuration, the movement and orientation of the distal portion 34 of an arm of the user 18 is monitored by the monitoring device 12. The scenario depicted in FIG. 1 may correspond to a stirring or sauté step of a recipe accessed by the monitoring system 10 that is processed on the cooktop 30a. In such an example, the controller 50 of the monitoring system 10 may monitor the sensor data reported from the monitoring device 12 and compare the stirring motion of the user 18 to a stirring motion profile. Additionally, the controller 50 of the system 10 may communicate with the cooktop to adjust a heat setting of a hob or burner. In some cases, the controller 50 may be configured to control the heat setting in response to the sensor data detected by the monitoring device 12. That is, if the stirring is more rigorous or rapid, the controller 50 may increase the heat setting. Alternatively, if the stirring motion slows or stops altogether, the controller 50 may decrease or even deactivate the heat output from cooktop 30a. Additionally, similar to the previously described examples, the system 10 may output audible, visual, and/or tactile instructions to guide the user 18 to conform to a target motion profile for the stirring operation or return to the cooktop 30a to begin or recommence a stirring activity.

Referring to FIG. 2, exemplary control structures for the monitoring system 10 are discussed in further detail. As discussed in various examples, a controller 50 of the system 10 may be implemented in one or more devices associated with the monitoring system 10. For example, the controller 50 may be included in the monitoring device 12, which may correspond to a dedicated accessory comprising the IMU 22a and a communication circuit in some cases or may correspond to a wearable smart device, which may include a display, speaker, microphone, and user interface, in addition to the IMU 22a. Additionally, multiple IMUs 22a may be incorporated in the handheld implement 15 (e.g., cooking implement, handheld appliance, etc.) and communicate sensor/motion data to the controller 50 from multiple sources. The controller 50 may additionally or alternatively be incorporated in the display device (e.g., tablet, computer, smartphone, smart home hub, mobile device, etc.) in communication with the monitoring device 12.

In some cases the controller 50 or a control module/processor in communication with the controller 50 may be incorporated in one or more of the appliance(s) 30. In such cases, the operation (e.g., heating, cooling, control settings, etc.) of the appliance(s) 30 may be controlled by the controller 50 and notifications from the system 10 may be communicated via one or more user interfaces (e.g., digital displays, audible indicators, etc.) of the appliance(s) 30. In this configuration, the appliance(s) 30 may be controlled by the system 10 to output instructions, notifications, or automated controls associated with the recipes of the food preparation application. Accordingly, the monitoring system 10 may be configured to control or receive motion data and inputs from a variety of sensors 22, IMUs 22a, appliance(s) 30, and handheld implements 15 to support the food preparation operation. In cases where the system 10 implements various connected devices 52 as demonstrated in FIG. 2, the controller 50 may correspond to a distributed control structure (e.g., multiple processors or controllers) that can be manually or automatically controlled via the communication interface(s) 40 in response to the sensor data detected via the monitoring device 12 and the IMU(s) 22a.

Still referring to FIG. 2, the communication interface 40 may correspond to a plurality of communication interfaces 40, which may be implemented using various communication protocols. In some implementations, the communication interfaces 40 may include a first communication interface 40a, which may provide communication between the monitoring device 12 and the display device 16. Additionally, the display device 16 may be in communication with a remote database 54 (e.g., cloud database) via a second communication interface 40b, which may be in communication with the internet or an internet-connected device. The second communication interface 40b may correspond to a local network and may be implemented to provide for distributed communication among the appliance(s) 30 and display devices 16, as well as additional monitoring devices 12 or other connected devices 52 via a hub or router 56. Additionally, the second communication interface 40b may include a combination of wired connections (e.g., Ethernet^{®}) as well as wireless networks interfaces.

In various examples, the first communication interface 40a may correspond to a first communication protocol that communicatively couples with the second communication interface via one or more of the connected devices 52. In such implementations, the first communication interface 40a may utilize Bluetooth^{®}, Bluetooth^{®} Low Energy (BLE), Thread, Ultra-Wideband, Z-Wave^{®}, ZigBee^{®}, or similar communication protocols. The second communication interface 40b may correspond to different wireless communication protocol than the first communication interface including, but not limited to, global system for mobile communication (GSM), general packet radio services (GPRS), code division multiple access (CDMA), enhanced data GSM environment (EDGE), fourth-generation (4G) wireless, fifth-generation (5G) wireless, Wi-Fi, world interoperability for microwave access (WiMAX), local area network (LAN), Ethernet^{®}, etc. Though discussed as implementing different wireless communication protocols, the first and second communication interfaces 40a, 40b may alternatively be implemented as a single, common communication interface and protocol.

As discussed herein, the IMU 22a may include a plurality of inertial sensors configured to monitor the orientation and inertial states of the monitoring device 12 in a coordinate system 58 comprising a plurality of translational axes 58a and rotational axes 58b. In this configuration, the IMU 22a may be operable to measure and communicate a direction and magnitude of movement along and/or about each of the axes 58a/58b and communicate such information to the processing unit of the monitoring device 12. In some embodiments, the IMU 22a may further comprise a magnetometer or magnetic field detector. The magnetometer may correspond to one or more magnetometers. Magnetometers may be configured to detect magnetic fields and may be utilized to orient the monitoring device 12 to provide a bearing or azimuthal direction of a magnetic pole relative to the monitoring device 12. In this configuration, a magnetometer may be operable to measure the azimuthal direction of the monitoring device 12 and communicate the directional data to the processing unit.

As discussed herein the IMU 22a of the monitoring device 12 may correspond to various forms of accelerometers, gyroscopes, and/or magnetometers, which may be implemented separately or as integrated circuits. As non-limiting examples, the IMU 22a may correspond to accelerometers, gyroscopes, and magnetometers based on Micro-ElectroMechanical Systems (MEMS) technology, Fiber Optic Gyros (FOG), and/or Ring Laser Gyros (RLG). Some exemplary devices that may be suitable for at least some applications as discussed herein may include devices from a variety of manufacturers including: Analog Devices, Inc.; ST Microelectronics, N.V.; Kionix, Inc.; etc. It will be appreciated that IMUs 22a may vary in quality, grade, performance, and/or durability across manufacturers and product lines.

As further discussed in reference to FIG. 8, the monitoring device 12 may include additional sensors 22, which may include, but are not limited to, a temperature sensor 22b, a humidity sensor 22c, an altimeter 22d or pressure sensor, etc. Each of the sensors 22 may be incorporated in the monitoring device 12, which may be in connection with the wearable accessory 14 (e.g., a wristband) of a user 18 and/or the handheld implement 15 (e.g., a handheld appliance or cooking utensil). The temperature sensor 22b and humidity sensor 22c may be implemented to detect ambient conditions and adjust the recipe instructions in the food preparation application. For example, timing for an instruction to thaw a frozen food product may be adjusted by the controller 50 based on the ambient temperature of the environment of the cooking system 10. Additionally, the altimeter 22d may correspond to a pressure sensor that detects variations in pressure and corresponding pressure changes that may indicate that the height of the monitoring device 12 and the corresponding portion of the user 18 has changed. Such detections of height may be implemented to track movements of the user 18 and/or detect the altitude of the cooking environment to adjust cooking times and recipe instructions. Additional examples of applications of the sensor data provided by the IMU 22a and additional sensors 22 are discussed in the following examples.

Referring now to FIGS. 3A and 3B, the monitoring device 12 is shown incorporated in the wearable accessory 14 in FIG. 3A and the handheld implement 15 (e.g., a handheld appliance or cooking utensil) in FIG. 3b. For example, the monitoring device 12 may correspond to a modular tracking accessory 60 configured to selectively connect to the wearable accessory 14, the handheld implement 15, or various kitchen or food preparation items. As shown, the tracking accessory 60 includes an appliance communication interface 40 or appliance interface 62 that may communicate instructions from the monitoring device 12 to the handheld implement 15. The communication interface 40 may comprise one or more power or data or communication terminals that align with corresponding terminals of the handheld implement 15 (e.g., inverted blender, hand mixer, etc.). In operation, control signals from the monitoring device 12 may be communicated to control a speed or intensity setting or limit that may be activated by the user 18 to complete the corresponding step of the recipe. In various instances, the appliance interface 62 may engage the wearable accessory 14 and/or the handheld implement via a snap-fit, magnetic, or other various mechanical connections, which may align the terminals of the appliance interface 62 with corresponding terminals of the handheld implement 15.

Though various exemplary applications are discussed, the monitoring system 10 may generally implement the monitoring device 12 in a food preparation environment to provide an interactive cooking experience via one or more computerized display devices 16 (e.g. tablet, computer, smartphone) in communication with the monitoring device 12. As elaborated in various detailed examples, the system 10 provides feedback to a user 18 as well as control of one or more appliance(s) 30. In this way, the system 10 may provide for an assisted cooking experience that not only improves the resulting food products but also instructs the user 18 to improve cooking and food preparation techniques through interactive instructions.

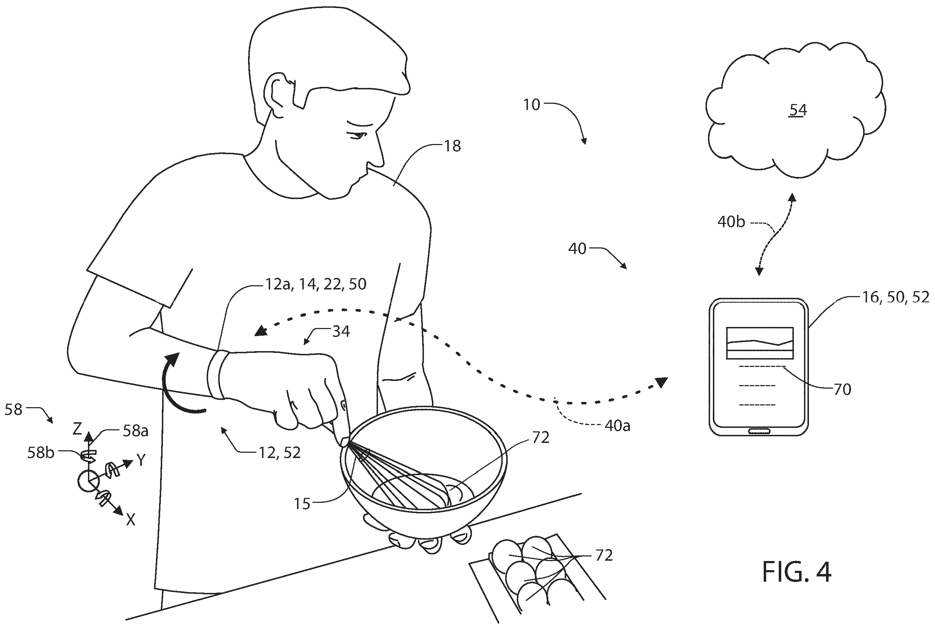

Referring now to FIG. 4, an example of a whipping operation is shown demonstrating a step of the recipe according to the food preparation method instructed by the food preparation application. In the situation depicted, the user 18 has been provided an instruction 70 by at least one of a text instruction, video or animated demonstration, or audible command output from the display device 16, which is depicted as a tablet. The instructions for the recipe may be accessed by the app via the second communication interface 40b (e.g., a home Wi-Fi connection) that accesses the remote database 54. In this configuration, a user profile may be linked to food preparation application and multiple devices (e.g., the connected devices 52) may access and provide interactive notifications to the user 18 to provide instructions for each step of the recipe. Additionally, the food preparation application may control one or more of the appliance(s) 30 to activate an automated instruction to prepare for a pending recipe step. For example, as the user 18 is instructed to whip eggs 72 as shown in FIG. 4, the system 10 may activate the oven 30c to preheat to a desired temperature for the recipe. In this way, the system 10 may provide for automated control of various appliance(s) 30 in addition to tracking the sensor data detected by the monitoring device 12.

Once the user 18 has received the instruction 70, the controller 50 may activate the monitoring device 12 to compare the movement of the user 18 detected with the IMU 22a to a predefined motion profile. As previously discussed, in order to monitor a manual food preparation step, such as whipping the eggs 72, the controller 50 of the system 10 may compare the sensor or motion data recorded by the IMU 22a to the motion profile accessed via the remote database 54. The motion profile may comprise acceleration data ranges as well as periodic cycles of the translational and/or rotational motion data for each of the axes 58a/58b that correspond to a targeted whipping operation. If the movement of the user 18 conforms to the motion profile, the food preparation application may respond by confirming that the motion detected by the IMU 22a conforms to the proper technique for the whipping operation. If the motion detected by the IMU 22a differs, the controller 50 may communicate an instruction 70 to the user 18 to adjust speed, adjust a length or direction of stroke, or adjust a technique (e.g., a wrist rotation). As shown in FIG. 4, the instruction is communicated via the display device 16. However, the instruction 70 may similarly be communicated by providing force or tactile feedback or an audible command via the monitoring device 12 or other connected devices 52. For example, the instruction may be communicated in the form of an audible tone from a speaker or a tactile indication from a vibration motor (e.g., feedback device 32) of the monitoring device 12. The tone or vibration may be set to a rhythm or tempo associated with the cyclical movement motion profile that may cue the user 18 how quickly or how intensely to whip the eggs 72. Such cues may be accompanied with visual instructions including animation or videos demonstrating the technique and targeted motion properties monitored by the monitoring device 12.

Based on the instructions 70, including audible cues, visual cues and tips, and tactile feedback, the user 18 may continue to complete each step of the recipe as guided by the food preparation application. Throughout the various steps of the recipe, the controller 50 of the system 10 may identify various user inputs to various connected devices 52 (e.g., the monitoring device 12, to the display device 16, an appliance 30, etc.). The controller 50 may selectively increment through each step of a recipe and access future steps and corresponding data (e.g. motion profiles, instructions, etc.) via the remote database 54. In the specific example of whipping the eggs 72, the controller 50 of the system 10 may identify that the whipping process is complete based on the sensor data reported from the IMU 22a. For example, the controller 50 may monitor the sensor or motion data identified by the monitoring device 12 and compare the sensor data to the motion profile for the whipping movement. Based on the sensor data, the controller 50 may monitor an accumulation of the food preparation movement (e.g., motion data that matches the whipping motion profile) and determine a completion of the first step of the recipe in response to the accumulation of the food preparation movement meeting or exceeding predefined accumulated motion total associated with the whipping step.

Once the movement total meets or exceeds the motion total indicated for the recipe, the controller 50 may prompt the user 18 to activate the next step via the display device 16 or the monitoring device 12 or automatically increment the recipe to the next step in the food preparation application. As previously discussed, the user input may be received via a touchscreen or button of the user interface of the display device 16, the monitoring device 12, or other connected devices 52. Alternatively, the controller 50 may be configured to detect a gesture (e.g. a page turn motion, pointing motion, a swipe, etc.) to indicate that the recipe should continue to the next step. In this way, the system 10 may provide for automatic and/or intuitive operation of the food preparation program by the user 18.

Referring now to FIG. 5, an example of a blending operation is shown with the monitoring device 12 applied as an implement tracking device 12b in connection with the handheld implement 15 in the form of an inverted blender. In the example, the handheld implement 15 is shown blending a mixture 80. In some cases, the monitoring device 12 may be integrated in the handheld implement 15, for example, in permanent communication with the operating circuitry of the inverted blender. Alternatively, the monitoring device 12 may be implemented in the modular tracking accessory 60 configuration. As previously discussed, the modular tracking accessory 60 may be configured to selectively connect to the handheld implement 15, or various kitchen or food preparation items. In this configuration, the tracking accessory 60 may communicate control signals and operating instructions to the handheld implement 15 (i.e., the handheld appliance) via the appliance interface 62. The control signals from the monitoring device 12 may be communicated to control a speed or intensity setting or limit that may be activated by the user 18 to complete the corresponding step of the recipe.

In addition to communicating the operating instructions or control commands to the handheld implement 15 (i.e., the handheld appliance in this example), the controller 50 may monitor the sensor data captured by the implement tracking device 12b to determine whether the device is activated (e.g., by vibrations identified via the IMU 22a) and to compare the movement of the user 18 to a motion profile for the corresponding blending step of the recipe. Similar to the manual whipping operation discussed previously, the controller 50 may compare the sensor data to the motion profile for the blending movement. Based on the sensor data, the controller 50 may monitor an accumulation of the food preparation movement (e.g., motion data that matches the blending motion profile) and determine a completion of the blending step of the recipe in response to the accumulation of the food preparation movement meeting or exceeding predefined accumulated motion total associated with the blending step. In this way, the activation of the appliance may be detected or controlled by the monitoring device 12 and the movement of the user 18 may be monitored. As previously discussed, the movement of the user 18 may be compared by the controller 50 to the motion profile in order to provide corrective instructions and detect an accumulated or effective level or amount of the blending applied. Once the detected blending level meets or exceeds a total defined for the step of the recipe, the controller 50 may determine that the blending step is completed and move forward to the next step in the recipe and/or provide the user 18 with instructions to move to the next step in the recipe.

In some cases, the sensors (e.g., the IMU 22a) of the monitoring device 12 may be configured to detect a quality of a substance or the mixture 80 being blended or mixed by the handheld implement 15. For example, when coupled to the handheld implement 15, the vibrations measured by the IMU 22a of the monitoring device 12 may differ significantly when the blender or mixer initially mixes ingredients as compared to the vibrations measured once the ingredients have been mixed together into a homogenous or evenly distributed mixture. That is, the initial mixing of various batters or mixtures for food preparation may include drastic variations in vibrations associated with the operation of churning blades or mixing heads as a result of passing through substances that are unevenly distributed or unevenly mixed. By comparison, once the mixture 80 of ingredients reaches an even consistency or evenly mixed combination, the variations in vibration diminish significantly. For example, thoroughly mixed substances generally provide for consistent vibrations when compared to ingredients that are unevenly distributed. Similarly, the vibrations associated with substances that change states (e.g., melting to liquid, whipping fluffing from liquid) also result in changes in vibrational frequency and intensity that may be reported by the monitoring device 12 and detected by the controller 50. In response to the changes in the vibration or force response of the operation of the handheld implement 15 (e.g., the blender, mixer, etc.) or appliance 30, the controller 50 may detect a state of the substance being processed. Based on the response, the controller 50 may detect whether the blending or mixing operation is complete.

Additionally, in some cases, the controller 50 may detect whether the consistency of the mixture 80 is too thin or thick. For example, if a mixture does not include adequate moisture, the intensity of the vibrations reported by the monitoring device 12 may not decrease over time at an expected rate. For example, if the variation in vibrational intensity does not decrease at a predetermined rate associated with the recipe (e.g., the intended consistency of the mixture 80) and the mixing utility (e.g., the handheld implement 15), the controller 50 may infer that the mixture is too thick. In response to such a determination, the controller 50 may output an instruction 82 to the user 18 indicating that more moisture (e.g., milk, water, oil, etc.) should be added to the recipe. Additionally or alternatively, the controller 50 may include in the instruction 82 that the user should review the ingredients added and the previous recipe steps to ensure that ingredients were added in appropriate proportions as instructed. In this way, the sensor data detected in relation to the operation of the handheld implement 15 or appliance 30 may be processed by the controller 50 to determine a quality of the mixture 80 or food product associated with or processed in the current step of the recipe. Though discussed in reference to the mixture being too thick, it shall be understood that the same attributes of the vibrations reported by the monitoring device could be applied to conversely identify if too much liquid is included in the mixture 80.

Referring now to FIGS. 4 and 5, the sensor data reported by the monitoring device 12 may be processed, tracked, and compared through various steps of the recipe in order to predict a completed state of the associated food product. For example, at the end at any step in the recipe, the controller 50 may compare the sensor data to the target motion data as defined by the model or exemplary motion profile for each preparation step and corresponding technique. Based on the comparison, the controller 50 may be configured to predict a quality state of the finished product prepared by the user 18. For example, in a kneading step for dough, the controller 50 of the system may identify that the dough has been kneaded more or less than a target level. That is, based on the sensor data from the monitoring device 12, the controller 50 may identify that the accumulated motion conforming to a kneading motion profile as reported by the IMU 22a is greater than or less than a target level of kneading. Based on this information, the controller may determine that the resulting bread will be chewy as a result of over-development of gluten or too fluffy as a result of under-development. Similarly, the controller 50 may be configured to predict whether a cake will be too dense as a result of under-whipped eggs. These quality determinations may be predicted by the controller 50 based on the sensor data reported by the IMU 22a in one or more of the steps of recipe and corresponding notifications may be communicated to the user 18 as warnings to prevent completed food products that do not conform to the target quality associated with the recipe. In this way, the system 10 may provide feedback to the user 18 not only to adjust techniques and time associated with various recipe steps but also to indicate the potential adverse results or changes in quality that may result if the proper technique is not performed for each step of the recipe.

The quality assessment may further be applied by the controller 50 to adjust instructions or automated steps associated with one or more of the appliances 30. For example, the quality assessment may further be evaluated to adjust recipe instructions or settings of one or more of the appliances 30. In some cases, the quality assessment may be implemented to adjust the temperature of a refrigerator for storage or a baking temperature of the oven 30c in order to optimize the resulting quality of the food product. For example, in response to a dough being processed or kneaded greater than or less than a target level, the controller 50 may adjust a recipe instruction or automated command to the oven 30c to increase or decrease a baking temperature or time. That is, the controller 50 may infer the consistency of the dough based on the sensor data reported by the monitoring device 12 and adjust the baking time or baking temperature to bake the dough for a different duration and/or temperature identified according to the consistency. In this way, the sensor data may be applied by the controller 50 to adjust the recipe instructions and/or automated commands for the appliances 30 to optimize the resulting quality of the food product.

Still referring to FIGS. 4 and 5, in some cases the controller 50 of the system 10 may record the food preparation performance of the user 18 as one or more of the recipes are performed on the food preparation application. For example, the ability of the user 18 to conform to the movements, techniques, and instructions communicated from the food preparation application (i.e., from the display device 16), may be tracked by the controller 50 and stored in a profile associated with the user in the remote database 54. In response to the ability or willingness of the user 18 to conform to the instructions provided by the food preparation application and the conformance of the corresponding sensor data to predefined motion profiles for each of the recipes, the system 10 may identify a skill level of the user 18. Based on the skill or performance level of the user 18, the system 10 may suggest recipes with a corresponding level of difficulty for the user 18 for future food preparation tasks. Over time, as the user 18 improves in conformance to the instructions, techniques, and associated target motion profiles for the food preparation tasks, the designated skill level for the user 18 associated with the user profile may increase and more challenging recipes may be suggested by the system 10. In this way, the system 10 may provide for an incremental training and guidance utility that allows the user 18 to try more challenging recipes in response to the sensor data indicating that the skill level is improving.

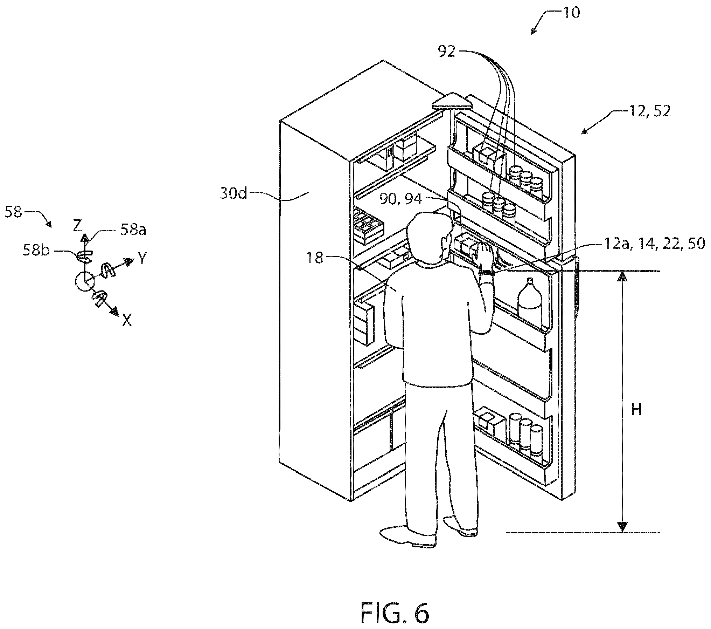

Referring now to FIG. 6, a representative application of the monitoring system 10 is shown in a recipe ingredient guidance step. The recipe guidance step is shown in reference to the refrigerator 30d. As previously discussed, the refrigerator 30d may correspond to one of the connected devices 52 of the system 10 with a controller or processor configured to communicate with the controller 50 of the system 10. In such cases, the monitoring device 12 may detect a relative elevation or height H of the distal portion 34 of an arm of the user 18 in relation to the location of one or more ingredients 90 stored in the refrigerator 30d. When applied in combination with an inventory tracking system of the refrigerator 30d, the monitoring device 12 and/or various connected devices 52 of the system 10 may communicate instructions to the user indicating when the height H aligns with an inventory location of a recipe ingredient 90 of a plurality of inventory items 92 that is necessary for a step of the recipe. In order to provide such feedback, the controller 50 of the system 10 may be configured to access an inventory map indicating the locations or at least the elevation of the inventory of the refrigerator 30d. Such functionality may be provided by an inventory tracking system as disclosed by U.S. Patent No. 10,157,308 B2, titled, "INTERACTION RECOGNITION AND ANALYSIS SYSTEM," and U.S. Patent No. 10,474,987 B2, titled, "OBJECT RECOGNITION SYSTEM FOR AN APPLIANCE AND METHOD FOR MANAGING HOUSEHOLD INVENTORY OF CONSUMABLES,". Additionally, though discussed in reference to the refrigerator 30d, the inventory tracking operations and feedback communicated via the system 10 may similarly be provided in reference to a pantry, cupboard or various storage locations where the ingredients may be stored and the inventory tracked.

In the example shown in FIG. 6, the user 18 may have received an instruction via the food preparation application (e.g., via the display device 16) to retrieve the recipe ingredient 90 for the recipe. In response to the activation of the ingredient retrieval step, the system 10 may access an inventory location 94 including the height of the recipe ingredient 90 from an inventory management database or system of the refrigerator 30d. Once the inventory location 94 is identified, the controller 50 of the system 10 may activate the monitoring device 12 to output one or more tones or alerts (e.g., via a speaker) or provide tactile feedback (e.g., via a vibration motor) to indicate a proximity of the monitoring device 12 to the inventory location 94. For example, the monitoring device 12 may increase a notification frequency of the audible or tactile feedback provided to the user 18 in response to the height H of the monitoring device 12 getting closer to the height of the inventory location 94. Similarly, the monitoring device may output a notification communicating the location of the recipe ingredient 90. For example, the monitoring device 12 or the display device 16 may output a notification that the recipe ingredient is located on a shelf 96 (e.g., top shelf of a refrigerator compartment) via a speaker to instruct the user where to locate the recipe ingredient. Accordingly, the system 10 may provide for various instructions to support the preparation of a food product via the food preparation application.

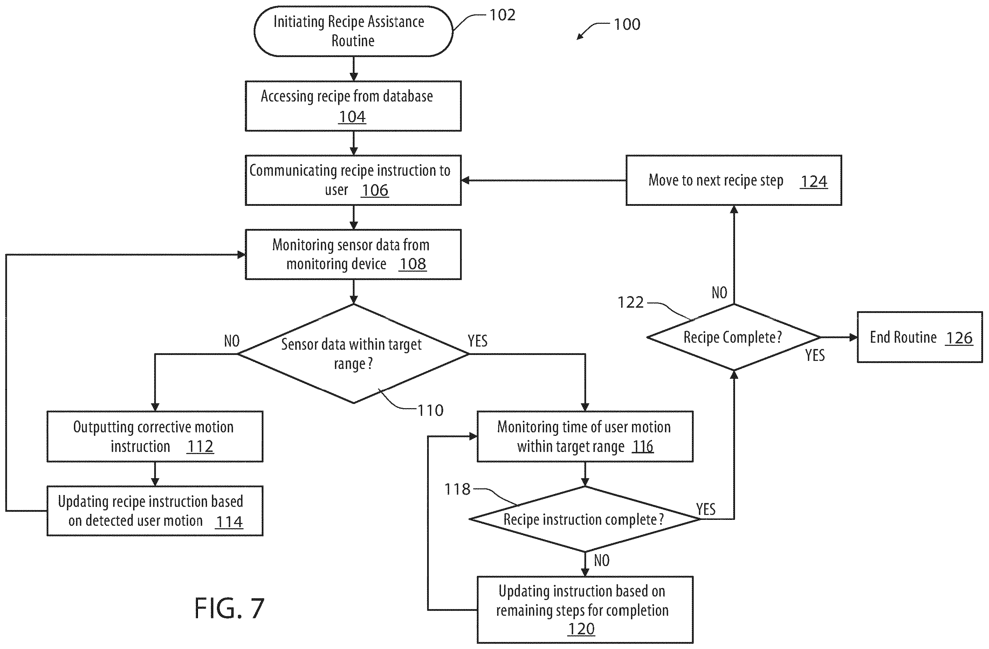

Referring now to FIG. 7, a flow chart is shown demonstrating a recipe assistance routine 100 for operation with the monitoring system 10. In operation, the recipe assistance routine 100 may be initiated in response to the selection of a recipe in the food preparation application, which may be manually selected via the display device 16 (102). Once selected, the controller 50 of the system 10 may access the recipe via the remote database 54 (104). The recipe may include a plurality of recipe steps that are selected based on various factors including an elapsed time, information inferred or interpreted from the sensor data, manual inputs, and various information that may be captured by the monitoring device 12 and/or communicated to the system 10 via the connected devices 52. In this way, the recipe assistance routine 100 may provide for broad applications that may change based on the needs of the specific recipe undertaken by the user 18.

Once the recipe is selected or accessed in step 104, the recipe may be communicated to the user 18 by the system 10 (106). As discussed in various examples, the recipe instruction may be communicated to the user 18 via the display device 16, the monitoring device 12, or other connected devices 52. Once the instruction is communicated, the routine 100 may continue to activate the monitoring device 12 to capture sensor data indicative of the movement of the user 18 (108). Based on the recipe instruction, the controller 50 accesses a predefined motion profile identifying a target range or multi-axis translational and rotational acceleration profile associated with the pending step of the recipe. More specifically, the controller accesses a first motion profile defining the food preparation movement based on the first step of the recipe. The step and associated information may be stored in a local memory or a remote database 54.

Based on the sensor data, the controller determines if the sensor data indicates that the motion of the user 18 is within a target range (110). If the motion is not within the target range, the controller 50 may update or output a control instruction from the display device 16, monitoring device 12 or various connected device 52 to provide a corrective motion instruction to the user 18 (112). Based on the response of the user 18 to the corrective motion instruction as detected from the sensor data, the controller 50 updates the recipe instruction. For example, the controller may increase a time for a whipping instruction, instruct additional rolling or kneading, or provide updated technique or movement instructions based on the motion identified by the monitoring device 12 (114). Following the updating of the recipe instruction, the routine 100 may return to step 108 to monitor the sensor data.

In step 110, if the motion is within the target range, the controller 50 monitors the time or an accumulation of a food preparation movement (e.g., motion data that matches the first motion profile) within the target range (116). Based on the accumulated motion identified from the sensor data, the controller 50 may determine if the accumulated motion meets or exceeds a target accumulated motion for the recipe step to determine a recipe step completion (118). If the total motion within the target range is less than the target accumulated motion for the recipe step, the controller 50 may update the recipe instruction to indicate a remaining time, steps, or modified techniques necessary to complete the recipe step and return to step 116 to monitor the sensor data (120). If the accumulated motion is greater than or equal to the total for the recipe instruction in step 118, the controller 50 may continue to determine if the recipe is complete or if the recipe includes further instructions (122). If the recipe includes further instructions, the routine 100 may move to the next recipe step (124). If the recipe step analyzed in step 122 is the final step, the controller 50 may end the routine for the food preparation application (126). Though described in the routine 100 as an automated recipe step initiation, the user 18 may be prompted or otherwise use one of the connected devices 52 to manually select a recipe step as discussed in various examples.

Referring now to FIG. 8, a block diagram of an exemplary embodiment of the monitoring device 12 is shown. The monitoring device 12 may comprise a processing unit 132, a memory 134, an input/output (I/O) interface 136. The I/O interface 136 may comprise one or more circuits (analog-to-digital converters, etc.) configured to communicate and/or convert the sensor data communicated from the sensors 22 to the processing unit 132. The processing unit 132 may correspond to one or more microprocessors, central processing units (CPUs), or other processors which run software programs for the monitoring device 12 or for other applications related to the functionality of monitoring device 12. For example, different software application programs such as menu navigation software, and/or a wide variety of other software and functional interfaces can be provided. In some embodiments, multiple different applications can be provided on a single monitoring device 12, and in some of those embodiments, multiple applications can run simultaneously on the monitoring device 12. In general, the control structure or the controller 50 of the system 10 may be distributed among one or more of the connected device(s) 52. However, generally, the processing unit 132 and the memory 134 of the monitoring device 12 may provide for a representative implementation of the controller 50 of the system 10 as discussed herein.

The memory 134 may correspond to a dedicated memory (e.g. RAM, ROM, Flash, etc.) and may further include a non-transient, computer readable medium, such as electronic memory or other storage medium such as hard disk, optical disk, flash drive, etc., for use with the processing unit 132. For example, an operating system may be stored in the storage medium and provide for the monitoring device 12 to control and manage system resources, enable functions of application software (e.g., the food preparation application), and interface application programs with other software and functions of the monitoring device 12. The I/O interface 136 may correspond to a variety of interfaces configured to provide communication to and from the processing unit. For example, the I/O interface may correspond to one or more of a variety of I/O interfaces including, but not limited to, PCIe ports, SATA interface ports, Intel^{®} QuickPath Interconnect^{®} (QPI) ports, USB 2.0, USB 3.0, or Thunderbolt^{™} interfaces (10 Gbps), Firewire, Fire800, Express Card, serial memory interfaces, etc.

As previously discussed, the functionality or extent of operating features of the monitoring device 12 may vary for different applications. In some cases, the monitoring device 12 may correspond to a wearable smart device (e.g., smart watch), which may include a display screen 140, speaker 142, microphone 144, and/or a user interface 146 (e.g., pushbuttons or touchscreen of display screen 140). Accordingly, the monitoring device 12 may be implemented by the system 10 to varying extents based on the features available in the monitoring device 12. That is, in some instances, the monitoring device 12 may passively detect and communicate the sensor data to the system 10 while in other cases, the monitoring device may additionally provide one or more audible, visual, and/or tactile alerts as well as receiving user input to control the operation or provide feedback to the food preparation application operated on the system 10 via the user interface 146. Accordingly, the monitoring device may be flexibly implemented in the system 10 to suit a desired application.

In various applications, the monitoring device 12 may comprise a wireless communication circuit 150. The communication circuit 150 provides the operating functionality of the communication interface 40 as previously discussed. That is, wireless communication circuit 150 may provide for communication via the first communication interface 40a and/or the second communication interface 40b via one or more circuits. The first communication interface 40a may provide for a first communication protocol including, but not limited to, Bluetooth^{®}, Bluetooth^{®} Low Energy (BLE), Thread, Ultra-Wideband, Z-Wave^{®}, ZigBee^{®}, or similar communication protocols. The second communication interface 40b may provide for a second communication protocol including, but not limited to, global system for mobile communication (GSM), general packet radio services (GPRS), code division multiple access (CDMA), enhanced data GSM environment (EDGE), fourth-generation (4G) wireless, fifth-generation (5G) wireless, Wi-Fi, world interoperability for microwave access (WiMAX), local area network (LAN), Ethernet^{®}, etc. Though discussed as implementing different wireless communication protocols, the first and second communication interfaces 40a, 40b may alternatively be implemented as a single, common interface and protocol.

Accordingly, the system and methods discussed herein provide for the monitoring of the sensor data captured by a monitoring device that may be applied in a variety of ways. In various cases, the sensor data may track the progress of steps of a recipe completed by a user as well as track the movement or vibrational feedback of an appliance or handheld implement used to prepare a food product. In this way, the system may provide feedback to the user, track the progress of completion of each recipe step, and/or determine or estimate a quality of the finished food product produced with the recipe based on the performance of the user relative to the predefined movements and steps of the recipe. In this way, the system may provide tracking and feedback for each step of the recipe as well as make qualitative assessments of the movement identified in the sensor data. Accordingly, the disclosure may be applied in a variety of ways to assess and improve a food preparation or cooking operation based on the sensor data and methods discussed herein.

As discussed herein, the controllers or processors of the disclosed system may correspond to devices that perform computer-implemented processes and apparatuses for practicing those processes. Implementations also may be embodied in the form of a computer program product having computer program code containing instructions embodied in non-transitory and/or tangible media, such as hard drives, USB (universal serial bus) drives, or any other machine readable storage medium, where computer program code is loaded into and executed by a computer, which provides for the configuration of a special-purpose control device, controller, or computer that implements the disclosed subject matter. Implementations also may be embodied in the form of computer program code, for example, whether stored in a storage medium, loaded into and/or executed by a computer/controller, or transmitted over some transmission medium or communication interfaces, wherein when the computer program code is loaded into and executed by controller, the controller becomes an apparatus for practicing implementations of the disclosed subject matter. When implemented on a general-purpose microprocessor, the computer program code segments configure the microprocessor to create specific logic circuits. Implementations of the controller may be implemented using hardware that may include a processor, for example, circuits such as an ASIC (Application Specific Integrated Circuit), portions or circuits of individual processor cores, entire processor cores, individual processors, programmable hardware devices such as a field programmable gate arrays (FPGA), and/or larger portions of systems that include multiple processors or multiple controllers that may operate in coordination.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A motion analysis apparatus (12) for food preparation comprising:
at least one motion detection device (22) configured to capture motion data, wherein the motion detection device (22) comprises at least one of a linear acceleration sensor and an angular rate sensor; and
a controller (50) in communication with the motion detection device (22), wherein the controller (50) is configured to:
compare the motion data to a food preparation movement; and
initiate a motion instruction for a first step of a recipe in response to a comparison of the motion data to the food preparation movement,
**characterized in that** the controller (50) is further configured to:
access a first motion profile defining the food preparation movement based on the first step of the recipe, said motion profile identifying a target range associated with the first step of the recipe,
determine if the motion data indicates that a motion of a user is within the target range,
wherein the controller is further configured to:
if the motion data is not within the target range, identify an improper technique in response to the comparison of the motion data to the food preparation movement, and generate a corrective motion instruction in response to the improper technique,
if the motion data is within the target range, monitor the time within the target range.

2. The apparatus (12) according to claim 1, wherein the controller (50) of the motion analysis apparatus (12) is in communication with a display device (16) operating a food preparation application (126), wherein the food preparation application (126) displays the motion instruction on the display device (16).

3. The apparatus (12) according to any one of claims 1-2, wherein the controller (50) is further configured to:
monitor an accumulation of the food preparation movement from the motion data; and
determine a completion of the first step of the recipe in response to the accumulation of the food preparation movement.

4. The apparatus (12) according to claim 3, wherein the controller (50) is further configured to:
in response to the completion of the first step, access a second step of the recipe; and
output a second step of the recipe.

5. The apparatus (12) according to claim 4, wherein the controller (50) is further configured to:
in response to the completion of the first step, update the food preparation movement to a second motion profile based on the second step of the recipe.

6. The apparatus (12) according to claim 1, wherein the controller (50) is further configured to:
wherein the corrective motion instruction comprises at least one of a rate of motion instruction, a directional instruction, and a technique instruction that directs a user (18) to move in conformance with the food preparation movement.

7. The apparatus (12) according to claim 1, wherein the controller (50) is further configured to:
update a step of the recipe in response to the improper technique.

8. The apparatus (12) according to any one of claims 1-7, wherein the controller (50) is further configured to:
identify a performance rating of a user profile based on the comparison of the motion data to the food preparation movement associated with a plurality of steps of the recipe.

9. The apparatus (12) according to claim 8, wherein the controller (50) is further configured to:
in response to the performance rating, identify recipes appropriate for the performance rating of the user (18).

10. The apparatus (12) according to claim 8, wherein the controller (50) is further configured to:
in response to the performance rating, identify training exercises and instructional videos for the user (18) to improve the performance rating for one or more techniques implemented in the recipe.

11. A method (100) for providing a food preparation instruction comprising:
accessing a recipe (104) in a food preparation application;
capturing motion data (108) in response to a first step of the recipe;
comparing the motion data to a food preparation movement (110) defined by a first motion profile for the first step of the recipe; and
output a motion instruction (112) for the first step in response to a comparison of the motion data to the food preparation movement,
**characterized in that** the method comprises:
accessing a first motion profile defining the food preparation movement based on the first step of the recipe, said motion profile identifying a target range associated with the first step of the recipe,
determining if the motion data indicates that a motion of a user is within the target range,
wherein the method further comprises the steps of:
if the motion instruction is not within the target range, identifying an improper technique in response to the comparison of the motion data to the food preparation movement, and generating a corrective motion instruction in response to the improper technique,
if the motion is within the target range, monitoring the time within the target range.

12. The method according to claim 11, further comprising:
monitoring an accumulation of the food preparation movement from the motion data (116); and
determining a completion of the first step of the recipe in response to the accumulation of the food preparation movement (118).

13. The method according to claim 12, further comprising:
in response to the completion of the first step (118), accessing a second step of the recipe; and
outputting a second step of the recipe (120) and updating the food preparation movement to a second motion profile based on the second step of the recipe.

## Patentansprüche

1. Bewegungsanalysegerät (12) zur Lebensmittelzubereitung, umfassend:
mindestens eine Bewegungsdetektionsvorrichtung (22), die ausgestaltet ist, um Bewegungsdaten zu erfassen, wobei die Bewegungsdetektionsvorrichtung (22) mindestens einen von einem Linearbeschleunigungssensor und/oder einem Winkelgeschwindigkeitssensor umfasst; und
einen Controller (50) in Kommunikation mit der Bewegungsdetektionsvorrichtung (22), wobei der Controller (50) ausgestaltet ist, zum:
Vergleichen der Bewegungsdaten mit einer Lebensmittelzubereitungsbewegung; und
Initiieren einer Bewegungsanweisung für einen ersten Schritt eines Rezepts als Reaktion auf einen Vergleich der Bewegungsdaten mit der Lebensmittelzubereitungsbewegung,
**dadurch gekennzeichnet, dass** der Controller (50) ferner ausgestaltet ist, zum:
Zugreifen auf ein erstes Bewegungsprofil, das die Lebensmittelzubereitungsbewegung basierend auf dem ersten Schritt des Rezepts definiert, wobei das Bewegungsprofil einen mit dem ersten Schritt des Rezepts in Beziehung stehenden Zielbereich identifiziert,
Bestimmen, ob die Bewegungsdaten angeben, dass eine Bewegung eines Benutzers innerhalb des Zielbereichs liegt,
wobei der Controller ferner ausgestaltet ist, zum:
wenn die Bewegungsdaten nicht innerhalb des Zielbereichs liegen, Identifizieren einer unsachgemäßen Technik als Reaktion auf den Vergleich der Bewegungsdaten mit der Lebensmittelzubereitungsbewegung, und Generieren einer korrigierenden Bewegungsanweisung als Reaktion auf die unsachgemäße Technik,
wenn die Bewegungsdaten innerhalb des Zielbereichs liegen, Überwachen der Zeit innerhalb des Zielbereichs.

2. Gerät (12) nach Anspruch 1, wobei der Controller (50) des Bewegungsanalysegeräts (12) mit einer Anzeigevorrichtung (16) in Kommunikation steht, auf der eine Lebensmittelzubereitungsanwendung (126) ausgeführt wird, wobei die Lebensmittelzubereitungsanwendung (126) die Bewegungsanweisung auf der Anzeigevorrichtung (16) anzeigt.

3. Gerät (12) nach einem der Ansprüche 1-2, wobei der Controller (50) ferner ausgestaltet ist, zum:
Überwachen einer Akkumulation der Lebensmittelzubereitungsbewegung aus den Bewegungsdaten; und
Bestimmen einer Fertigstellung des ersten Schritts des Rezepts als Reaktion auf die Akkumulation der Lebensmittelzubereitungsbewegung.

4. Gerät (12) nach Anspruch 3, wobei der Controller (50) ferner ausgestaltet ist, zum:
als Reaktion auf die Fertigstellung des ersten Schritts, Zugreifen auf einen zweiten Schritt des Rezepts; und
Ausgeben eines zweiten Schritts des Rezepts.

5. Gerät (12) nach Anspruch 4, wobei der Controller (50) ferner ausgestaltet ist, zum:
als Reaktion auf die Fertigstellung des ersten Schritts, Aktualisieren der Lebensmittelzubereitungsbewegung auf ein zweites Bewegungsprofil basierend auf dem zweiten Schritt des Rezepts.

6. Gerät (12) nach Anspruch 1, wobei der Controller (50) ferner ausgestaltet ist, zum:
wobei die korrigierende Bewegungsanweisung mindestens eine von einer Bewegungsgeschwindigkeitsanweisung, einer Richtungsanweisung und einer Technikanweisung umfasst, durch die ein Benutzer (18) angewiesen wird, sich in Übereinstimmung mit der Lebensmittelzubereitungsbewegung zu bewegen.

7. Gerät (12) nach Anspruch 1, wobei der Controller (50) ferner ausgestaltet ist, zum:
Aktualisieren eines Schritts des Rezepts als Reaktion auf die unsachgemäße Technik.

8. Gerät (12) nach einem der Ansprüche 1-7, wobei der Controller (50) ferner ausgestaltet ist, zum:
Identifizieren einer Leistungsbewertung eines Benutzerprofils basierend auf dem Vergleich der Bewegungsdaten mit der Lebensmittelzubereitungsbewegung, die mit einer Mehrzahl von Schritten des Rezepts in Beziehung steht.

9. Gerät (12) nach Anspruch 8, wobei der Controller (50) ferner ausgestaltet ist, zum:
als Reaktion auf die Leistungsbewertung, Identifizieren von Rezepten, die für die Leistungsbewertung des Benutzers (18) geeignet sind.

10. Gerät (12) nach Anspruch 8, wobei der Controller (50) ferner ausgestaltet ist, zum:
als Reaktion auf die Leistungsbewertung, Identifizieren von Trainingsübungen und Lehrvideos für den Benutzer (18), um die Leistungsbewertung für eine oder mehrere in dem Rezept implementierte Techniken zu verbessern.

11. Verfahren (100) zum Bereitstellen einer Lebensmittelzubereitungsanweisung, umfassend:
Zugreifen auf ein Rezept (104) in einer Lebensmittelzubereitungsanwendung;
Erfassen von Bewegungsdaten (108) als Reaktion auf einen ersten Schritt des Rezepts;
Vergleichen der Bewegungsdaten mit einer Lebensmittelzubereitungsbewegung (110), die durch ein erstes Bewegungsprofil für den ersten Schritt des Rezepts definiert ist; und
Ausgeben einer Bewegungsanweisung (112) für den ersten Schritt als Reaktion auf einen Vergleich der Bewegungsdaten mit der Lebensmittelzubereitungsbewegung,
**dadurch gekennzeichnet, dass** das Verfahren umfasst:
Zugreifen auf ein erstes Bewegungsprofil, das die Lebensmittelzubereitungsbewegung basierend auf dem ersten Schritt des Rezepts definiert, wobei das Bewegungsprofil einen mit dem ersten Schritt des Rezepts in Beziehung stehenden Zielbereich identifiziert,
Bestimmen, ob die Bewegungsdaten angeben, dass eine Bewegung eines Benutzers innerhalb des Zielbereichs liegt,
wobei das Verfahren ferner die Schritte umfasst:
wenn die Bewegungsanweisung nicht innerhalb des Zielbereichs liegt, Identifizieren einer unsachgemäßen Technik als Reaktion auf den Vergleich der Bewegungsdaten mit der Lebensmittelzubereitungsbewegung, und Generieren einer korrigierenden Bewegungsanweisung als Reaktion auf die unsachgemäße Technik,
wenn die Bewegung innerhalb des Zielbereichs liegt, Überwachen der Zeit innerhalb des Zielbereichs.

12. Verfahren nach Anspruch 11, ferner umfassend:
Überwachen einer Akkumulation der Lebensmittelzubereitungsbewegung aus den Bewegungsdaten (116); und
Bestimmen einer Fertigstellung des ersten Schritts des Rezepts als Reaktion auf die Akkumulation der Lebensmittelzubereitungsbewegung (118).

13. Verfahren nach Anspruch 12, ferner umfassend:
als Reaktion auf die Fertigstellung des ersten Schritts (118), Zugreifen auf einen zweiten Schritt des Rezepts; und
Ausgeben eines zweiten Schritts des Rezepts (120) und Aktualisieren der Lebensmittelzubereitungsbewegung auf ein zweites Bewegungsprofil basierend auf dem zweiten Schritt des Rezepts.

## Revendications

1. Appareil (12) d'analyse de mouvement pour préparation alimentaire comprenant :
au moins un dispositif de détection de mouvement (22) configuré pour capturer des données de mouvement, dans lequel le dispositif de détection de mouvement (22) comprend au moins l'un d'un capteur d'accélération linéaire et d'un capteur de vitesse angulaire ; et
un dispositif de contrôle (50) en communication avec le dispositif de détection de mouvement (22),
dans lequel le dispositif de contrôle (50) est configuré pour :
comparer les données de mouvement à un mouvement de préparation alimentaire ; et
pour initier une instruction de mouvement pour une première étape d'une recette en réponse à une comparaison des données de mouvement au mouvement de préparation alimentaire,
**caractérisé en ce que** le dispositif de contrôle (50) est en outre configuré pour :
accéder à un premier profil de mouvement définissant le mouvement de préparation alimentaire sur la base de la première étape de la recette, ledit profil de mouvement identifiant une plage cible associée à la première étape de la recette,
déterminer si les données de mouvement indiquent qu'un mouvement d'un utilisateur se trouve à l'intérieur de la plage cible,
dans lequel le dispositif de contrôle est en outre configuré pour :
dans le cas où les données de mouvement ne se situent pas à l'intérieur de la plage cible, identifier une technique incorrecte en réponse à la comparaison des données de mouvement au mouvement de préparation alimentaire, et générer une instruction de mouvement correctif en réponse à la technique incorrecte,
dans le cas où les données de mouvement se situent à l'intérieur de la plage cible, surveiller le temps à l'intérieur de la plage cible.

2. Appareil (12) selon la revendication 1, dans lequel le dispositif de contrôle (50) de l'appareil (12) d'analyse de mouvement se trouve en communication avec un dispositif d'affichage (16) faisant fonctionner une application de préparation alimentaire (126), dans lequel l'application de préparation alimentaire (126) affiche l'instruction de mouvement sur le dispositif d'affichage (16).

3. Appareil (12) selon l'une quelconque des revendications 1 à 2, dans lequel le dispositif de contrôle (50) est en outre configuré pour :
surveiller une accumulation du mouvement de préparation alimentaire à partir des données de mouvement ; et
pour déterminer un achèvement de la première étape de la recette en réponse à l'accumulation du mouvement de préparation alimentaire.

4. Appareil (12) selon la revendication 3, dans lequel le dispositif de contrôle (50) est en outre configuré pour :
en réponse à l'achèvement de la première étape, accéder à une seconde étape de la recette ; et
pour délivrer une seconde étape de la recette.

5. Appareil (12) selon la revendication 4, dans lequel le dispositif de contrôle (50) est en outre configuré pour :
en réponse à l'achèvement de la première étape, mettre à jour le mouvement de préparation alimentaire au niveau d'un second profil de mouvement basé sur la seconde étape de la recette.

6. Appareil (12) selon la revendication 1, dans lequel le dispositif de contrôle (50) est en outre configuré pour :
dans lequel l'instruction de mouvement correctif comprend au moins l'un d'une fréquence d'instruction de mouvement, d'une instruction directionnelle, et d'une instruction technique qui oriente un utilisateur (18) à se déplacer conformément au mouvement de préparation alimentaire.

7. Appareil (12) selon la revendication 1, dans lequel le dispositif de contrôle (50) est en outre configuré pour :
mettre à jour une étape de la recette en réponse à la technique incorrecte.

8. Appareil (12) selon l'une quelconque des revendications 1 à 7, dans lequel le dispositif de contrôle (50) est en outre configuré pour :
identifier une note de performance d'un profil utilisateur basé sur la comparaison des données de mouvement au mouvement de préparation alimentaire associé à une pluralité d'étapes de la recette.

9. Appareil (12) selon la revendication 8, dans lequel le dispositif de contrôle (50) est en outre configuré pour :
en réponse à la note de performance, identifier des recettes appropriées à la note de performance de l'utilisateur (18).

10. Appareil (12) selon la revendication 8, dans lequel le dispositif de contrôle (50) est en outre configuré pour :
en réponse à la note de performance, identifier des exercices d'apprentissage et des vidéos d'instruction pour l'utilisateur (18) afin d'améliorer la note de performance pour une ou plusieurs techniques mises en œuvre dans la recette.

11. Procédé (100) de fourniture d'une instruction de préparation alimentaire comprenant les étapes consistant à :
accéder à une recette (104) dans une application de préparation alimentaire ;
capturer des données de mouvement (108) en réponse à une première étape de la recette ;
comparer les données de mouvement à un mouvement de préparation alimentaire (110) défini par un premier profil de mouvement pour la première étape de la recette ; et
à délivrer une instruction de mouvement (112) pour la première étape en réponse à une comparaison des données de mouvement au mouvement de préparation alimentaire,
**caractérisé en ce que** le procédé comprend les étapes consistant à :
accéder à un premier profil de mouvement définissant le mouvement de préparation alimentaire sur la base de la première étape de la recette, ledit profil de mouvement identifiant une plage cible associée à la première étape de la recette,
déterminer si les données de mouvement indiquent qu'un mouvement d'un utilisateur se situe à l'intérieur de la plage cible,
dans lequel le procédé comprend en outre les étapes consistant à :
si l'instruction de mouvement ne se situe pas à l'intérieur de la plage cible, identifier une technique incorrecte en réponse à la comparaison des données de mouvement au mouvement de préparation alimentaire, et à générer une instruction de mouvement correctif en réponse à la technique incorrecte,
si le mouvement se situe à l'intérieur de la plage cible, surveiller le temps à l'intérieur de la plage cible.

12. Procédé selon la revendication 11, comprenant en outre :
la surveillance d'un cumul du mouvement de préparation alimentaire à partir des données de mouvement (116) ; et
la détermination d'un achèvement de la première étape de la recette en réponse au cumul du mouvement de préparation alimentaire (118).

13. Procédé selon la revendication 12, comprenant en outre :
en réponse à l'achèvement de la première étape (118), accéder à une seconde étape de la recette ; et
délivrer une seconde étape de la recette (120) et mettre à jour le mouvement de préparation alimentaire au niveau d'un second profil de mouvement basé sur la seconde étape de la recette.
